# DEMANDE DE BREVET EUROPEEN

(11) **EP 0 926 364 A1**
(43) Date de publication de la demande: **30.06.1999**
(21) Numéro de dépôt: 98403204.5
(22) Date de dépôt: 18.12.1998
(51) Int. Cl.: F16C 7/02, F16C 33/12

(54) **Bielle à coussinet intégré, son procédé de fabrication et alliage pour la fabrication d'un tel coussinet intégré**

(30) Priorité: 24.12.1997 FR 9716474
(71) Demandeur: RENAULT, 92109 Boulogne-Billancourt (FR)
(72) Inventeur: Ben Abdallah, Adel, 75016 Paris (FR)

(57) **Abrégé**

La bielle (1) selon l'invention comprend une tête de bielle (3) pourvue d'un alésage (6) et un coussinet (8) disposé dans l'alésage, le coussinet étant un coussinet intégré constitué d'une couche d'un alliage métallique déposée par projection thermique sur la surface de l'alésage de la tête de la bielle.

Application aux moteurs.

## Description

La présente invention concerne d'une manière générale des bielles à coussinet intégré, un procédé de fabrication de ces bielles à coussinet intégré ainsi que des alliages spécifiques pour la fabrication de coussinets de bielles intégrés.

Le contact bielle/vilebrequin est un problème aujourd'hui crucial, en raison des fortes charges qui s'y appliquent.

La solution actuellement employée par tous les constructeurs est l'utilisation d'une plaque rapportée ou insert en un métal à faible rigidité pour amortir le contact entre la bielle et le vilebrequin, appelée coussinet.

Cette solution classique impose de nombreuses contraintes et présente de nombreux inconvénients.

Le maintien des deux demi-coussinets dans l'alésage de la tête de la bielle nécessite parfois la réalisation de deux encoches, une dans le corps et l'autre dans le chapeau de la bielle. Ceci a pour objectif de faciliter le montage des coussinets et éviter leur rotation dans l'alésage de la tête.

Pour bien fixer les coussinets, un frettage de ceux-ci dans l'alésage de la tête de la bielle est requis. Lors de l'assemblage de la bielle (corps et chapeau contenant les coussinets), les tensions de serrage des vis de fixation dues au frettage des coussinets sont très importantes. Ceci nécessite des vis de grand diamètre, donc des trous dans le corps et le chapeau de la bielle de dimension également importante, et par conséquent une tête de bielle plus volumineuse.

Les fortes tensions de serrage conduisent également à avoir un plan de joint entre le chapeau et le corps de la bielle de taille relativement importante.

Les contraintes de frettage et des tensions de serrage des coussinets engendrent une diminution de la tenue en fatigue des bielles, en particulier au niveau du congé ou chanfrein de la face d'appui de la tête de vis (surface usinée du chapeau de la bielle), au niveau du raccord corps-tête, et dans le rayon de raccordement (surface brute de forge du corps de la bielle).

D'autre part, le surdimentionnement de la bielle crée un encombrement qui conduit à avoir une taille de la mandoline (c'est-à-dire l'espace couvert par toutes les positions prises par la bielle au cours d'un tour de moteur) très importante, augmente le poids de la bielle, et contribue à augmenter la consommation de carburant, d'autant plus que ce poids concerne une masse mobile.

En outre avec les coussinets rapportés classiques, la surface des coussinets n'est pas continue ce qui peut parfois créer une interruption du film de lubrification.

Egalement, des défauts d'alignement des coussinets rapportés peuvent provoquer une mauvaise portance, ce qui conduit à diverses formes d'usure.

La gamme d'usinage et d'assemblage de la bielle impose un état de surface fin du logement prévu pour les coussinets, puis la mise en place du coussinet avec ajustement des positionnements dans les encoches, ce qui engendre un surcoût associé au montage.

Enfin, des coussinets rapportés classiques connus aujourd'hui atteignent leur limite et ne peuvent supporter des contraintes provoquées par les moteurs fortement chargés.

La présente invention a donc pour objet de fournir une bielle à coussinet intégré qui remédie aux inconvénients des bielles à coussinets rapportés de l'art antérieur.

La présente invention a aussi pour objet de fournir un procédé de fabrication d'une telle bielle à coussinet intégré.

L'invention a encore pour objet des alliages pour la fabrication des coussinets intégrés.

On atteint les objectifs ci-dessus selon l'invention, en réalisant une bielle comprenant une tête de bielle pourvue d'un alésage et un coussinet disposé dans un alésage, caractérisé en ce que le coussinet est un coussinet intégré formé par une couche d'un alliage métallique pour coussinet déposée sur l'alésage de la tête de la bielle.

La suite de la description se réfère aux figures annexées qui représentent respectivement :
figure 1, une bielle à coussinet intégré, selon l'invention ; et
figure 2, une représentation schématique d'un procédé de fabrication d'un coussinet intégré selon l'invention, par pulvérisation par plasma.

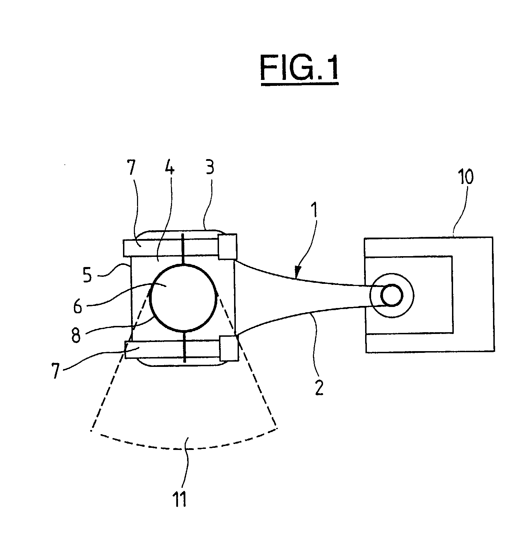

En se référant à la figure 1, on a représenté une bielle comportant un coussinet intégré selon l'invention. La bielle 1 représentée comprend un corps de bielle 2 réuni à un piston 10 et une tête de bielle 3 associée à un vilebrequin 11.

La tête de bielle 3 comprend une partie 4 solidaire du corps de bielle 2 et un chapeau 5 séparé. Comme cela est bien connu la partie 4 de la tête de bielle et le chapeau 5 sont usinés pour conjointement former un alésage 6. La partie 4 de la tête de bielle et le chapeau 5 sont fixés ensemble par des vis 7.

Selon l'invention un coussinet intégré 8 constitué par une couche d'un alliage métallique déposée sur la surface de l'alésage 6 de la tête de bielle 5.

La couche d'alliage constituant le coussinet intégré a généralement une épaisseur comprise entre 50 et 350 µm, de préférence entre 150 et 300 µm.

L'alliage constituant le coussinet intégré a généralement également une porosité en volume de 2 à 10 %, de préférence d'environ 5 %.

Les alliages métalliques utiles pour les coussinet intégrés selon l'invention sont les alliages à base d'aluminium ou de cuivre.

Ces alliages ont généralement une dureté HV0,5 comprise entre 40 à 250.

Ils sont également compatibles avec le matériau du vilebrequin, et ne forment pas de soudure avec celui-ci après des essais de frottement.

D'autre part, leur faible dureté et leur aptitude à la déformation permettent également de piéger les particules et impuretés qui peuvent se trouver dans l'huile, dans le contact coussinet de bielle/vilebrequin.

Des essais de frottement menés sur le coussinet intégré révèlent une bonne résistance mécanique (fatigue, pression de contact, cavitation, usure) ainsi qu'un bon comportement vis à vis de la corrosion chimique (agression par l'huile).

L'affinité vis à vis de l'huile est en général remarquable.

Le dépôt formant le coussinet intégré du fait de sa porosité, constitue également une réserve d'huile de lubrification, ce qui contribue à améliorer les performances de frottement.

Des alliages recommandés pour les coussinets intégrés selon l'invention sont indiqués dans le tableau 1 ci-dessous.

**TABLEAU I**

| **Alliage n°** | **Composition % en poids** | | | | | |
|---|---|---|---|---|---|---|
| | Sn | Si | Zn | Mg | Cu | Al |
| 1 | 5-25 | - | - | - | 1-3 | complément |
| 2 | 5-20 | 2-6 | - | - | 1-3 | complément |
| 3 | 5-25 | - | 2-5 | 1-2 | 1-2 | complément |
| 4 | 3-10 | - | - | - | Complément | 5-25 |
| et des impuretés éventuelles | | | | | | |

Des compositions préférentielles d'alliage pour les coussinets intégrés selon l'invention sont données dans le tableau II ci-dessous :

**TABLEAU II**

| **Alliage n°** | **Composition % en poids** | | | | | |
|---|---|---|---|---|---|---|
| | Sn | Si | Zn | Mg | Cu | Al |
| 5 | 20-25 - | | - | - | 1,4 | complément |
| 6 | 18 | 5 | - | - | 2 | complément |
| 7 | 20 | - | 4-5 | 1-5 | 1-6 | complément |
| 8 | 3-7 | - | - | - | Complément | 5-15 |
| et des impuretés éventuelles. | | | | | | |

Dans une réalisation de l'invention, le coussinet intégré peut comporter une sous-couche entre la couche de l'alliage métallique et la surface de l'alésage de la tête de bielle, notamment pour améliorer l'adhérence de la couche d'alliage. Cette sous-couche a généralement une épaisseur de l'ordre de 50 à 100 µm, de préférence d'environ 50 µm. En général, cette sous-couche est constituée par des alliages nickel-aluminium en particulier des alliage nickel-aluminium comportant, en poids, 95 % de nickel et 5 % d'aluminium ou 80 % de nickel et 20 % d'aluminium, et des impuretés éventuelles. Une sous couche Ni-Cr peut être également utilisée.

Enfin, la couche d'alliage constituant le coussinet intégré peut être revêtue d'une mince couche d'étain, par exemple par un procédé électrolytique, pour mieux satisfaire les propriétés tribologiques, notamment lors du rodage.

La bielle à coussinet intégré selon l'invention peut être réalisée par dépôt sur la surface de l'alésage de la tête de bielle par tout procédé de dépôt approprié et en particulier par pulvérisation par plasma.

Les alliages utilisés, en particulier les alliages préférés des tableau I et II, dans le procédé de dépôt par pulvérisation par plasma peuvent se présenter sous la forme de poudre, fil ou fil fourré. La poudre peut être pré-alliée, atomisée ou agglomérée. De préférence, la poudre d'alliage est constituée de grains sphériques.

Dans le cas des alliages n° 1 et 5, (poudre AlSnCu), l'étain est généralement réparti tout autour de la particule d'aluminium.

L'épaisseur de la couche d'alliage métallique déposée est généralement comprise, avant usinage, entre 300µm et, 700µm et finalement usinée de manière classique pour former le coussinet intégré d'épaisseur comprise entre 100 et 350 µm, de préférence entre 150 et 300µm.

Comme indiqué précédemment, le dépôt d'une sous-couche en alliage nickel - aluminium, d'épaisseur généralement comprise entre 50 et 100µm peut s'avérer nécessaire pour améliorer l'adhérence du dépôt de l'alliage constituant le coussinet intégré. Ce dépôt peut être réalisé de la même façon que le dépôt de l'alliage constituant le coussinet intégré, en particulier par pulvérisation par plasma.

On peut également soumettre la couche d'alliage formant le coussinet intégré à un traitement thermique, à une température comprise entre 150 et 400°C dans un four, dans l'air. Avec les alliages préférés des tableaux 1 et 2, un tel traitement thermique permet de faire évoluer la microstructure et d'obtenir des précipités conduisant à des duretés variées en fonction des densifications. Ainsi, on peut adapter les propriétés tribologiques de la couche d'alliage. En particulier, un tel traitement thermique permet d'obtenir une bonne répartition de l'étain au sein du dépôt, en particulier une forte teneur en étain à la surface pour l'accommodation tribologique entre les pièces frottantes. Par exemple, pour les alliages n° 3 et 7 préférés, la température de traitement thermique de 400°C correspond à un recuit de coalescence.

Pour la réalisation du dépôt de l'alliage du coussinet intégré par pulvérisation par plasma, on peut utiliser des torches à plasma du commerce.

De préférence on soumet la surface de l'alésage de la bielle, préalablement au dépôt de la couche d'alliage constituant le coussinet intégré à, une étape de nettoyage, par exemple un sablage sous une pression de 400 kPa (4 bars) avec une poudre de corindon de diamètre 100-500µm environ pour obtenir une rugosité de surface favorable à l'accrochage du dépôt de la couche d'alliage du coussinet. Une rugosité Ra d'environ 6µm s'avère particulièrement adéquate.

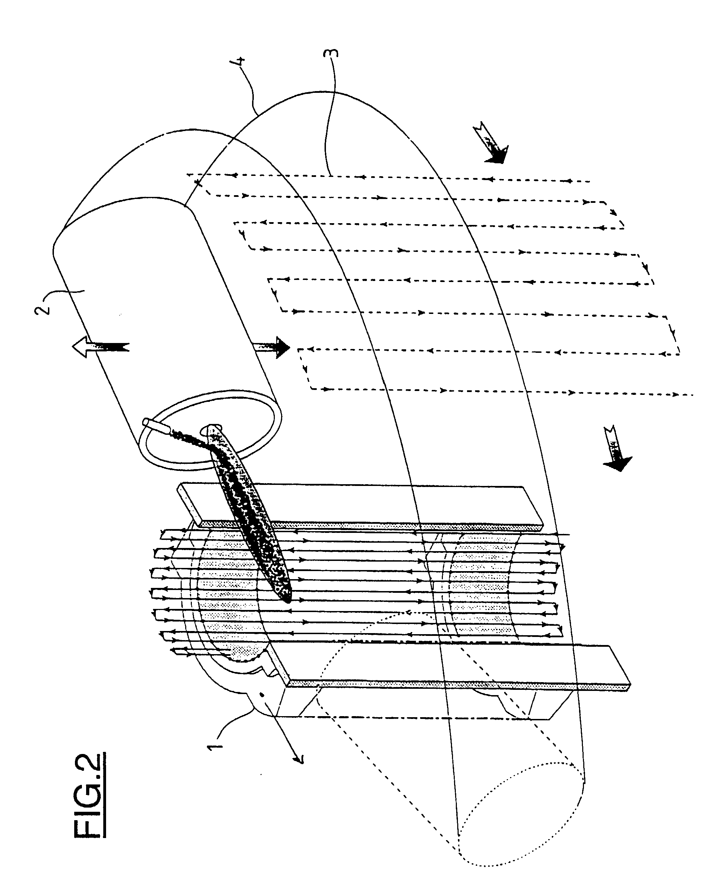

Dans le mode de réalisation de bielles à coussinet intégré selon l'invention, représentée à la figure 2, on réalise un empilement 1 de chapeaux et corps de bielle de façon à former un demi-tube. On peut empiler et ainsi superposer indifféremment des corps seuls, des chapeaux seuls ou corps et chapeaux à la fois. Les bielles sont alors prêtes à recevoir la couche d'alliage pour former le coussinet intégré.

Le dépôt s'effectue sur toute la surface de l'alésage des pièces par une combinaison d'un enchaînement de déplacements verticaux 3 et d'une rotation sur un demi-cercle d'une torche de pulvérisation par plasma 2.

Dans le cas du demi-tube 1 représenté sur la figure 2, on peut par exemple utiliser une torche type F4 de la société Sulzer Metco.

Pour les bielles sécables (bielles cassées), on peut réaliser le dépôt de la couche d'alliage constituant le coussinet intégré au moyen d'une torche dite d'intérieur adaptée aux dimensions de l'alésage à traiter, telle qu'une torche du commerce de type F2 ou F3 de la société Sulzer Metco. Les bielles sont préalablement empilées pour former un tube au niveau des têtes de bielles. Un mouvement rotatif de la torche permet alors de maintenir les bielles fixes et d'assurer une bonne homogénéité de l'épaisseur de la couche d'alliage déposée ou bien par torche d'intérieur qui a un mouvement vertical et les bielles qui tournent. Pour obtenir ce mouvement rotatif, on peut par exemple utiliser un équipement "rotaplasma®" de la société Sulzer Metco qui permet une rotation de la torche par rapport à l'axe des alésages des bielles en cours de projection.

Dans le cas des bielles sécables, l'intégration du dépôt de la couche d'alliage dans la gamme d'usinage et d'assemblage de la bielle peut se faire de trois façons différentes :
- le dépôt peut être appliqué sur une bielle brute de forge puis on réalise l'entaille, l'usinage et le cassage de la bielle. Cette technique est utilisable sur une bielle ayant une bonne circularité de la tête brute de forge ;
- le dépôt peut également être appliqué sur une bielle ayant des faces et alésage usinés, puis on réalise la préentaille, l'usinage et le cassage de la bielle ;
- enfin on peut réaliser initialement la préentaille sur une bielle ayant des faces et des alésages usinés, déposer la couche d'alliage, puis usiner et casser la bielle.

Après dépôt, les couches d'alliage constituant les coussinets intégrés sont alors usinées de manière classique à l'épaisseur voulue généralement comprise entre 50 et 350µm.

Si nécessaire, une couche supplémentaire superficielle d'étain peut être déposée sur la couche d'alliage du coussinet intégré par un dépôt électrolytique flash.

La réalisation d'un coussinet intégré selon l'invention permet une simplification de la gamme d'usinage, en supprimant la fabrication d'insert, de l'usinage du logement du coussinet, de la réalisation d'encoches et de la nécessité du frettage des coussinets.

La réalisation du coussinet intégré selon l'invention simplifie également le montage de la bielle. Du fait de la suppression du frettage, on réduit la tension de serrage sur les vis lors de l'assemblage de la bielle ce qui contribue à renforcer la tenue en fatigue de la bielle. Ainsi, le calcul montre qu'avec une coussinet intégré selon l'invention on obtient un gain moyen de 40 % sur les propriétés de fatigue de la bielle par rapport à une bielle à coussinet rapporté.

En outre avec la suppression du frettage, on peut réduire la dimension de la tête de bielle en allégeant le cahier des charges sur les vis de maintien des coussinets et en réduisant l'entraxe-vis. Par cette diminution de l'entraxe-vis, on réalise une diminution de l'encombrement par la limitation de la taille de la mandoline (c'est-à-dire l'espace couvert par toutes positions prises par la bielle au cours d'un tour de moteur).

L'allégement du cahier des charges sur les vis rend possible la diminution de leur diamètre.

Par ailleurs, avec un dépôt de couche d'alliage constituant le coussinet intégré qui peut être de 150µm environ, on peut obtenir un gain d'environ 4mm sur le diamètre de l'alésage de la tête de la bielle, ce qui permet également de réduire le diamètre de la tête de la bielle. En diminuant ainsi l'encombrement la tête de la bielle et de la mandoline, on peut diminuer la taille du moteur pour une même puissance. L'obtention d'une bielle à coussinet intégré, plus légère et plus compacte, contribue également à réduire la consommation de carburant.

Avec les coussinets intégrés selon l'invention, la surface de contact avec le vilebrequin est continue et permet d'éviter une rupture du film d'huile de lubrification et crée une bonne portance.

La réalisation de telles bielles à coussinets intégrés permet un choix de matériaux plus large pour répondre aux sollicitations des moteurs haute performance, plus chargés.

Enfin, les défauts d'alignement sont éliminés et, par rapport aux bielles à coussinets rapportés, le jeu dans le contact bielle-vilebrequin est plus homogène.

## Revendications

1. Bielle sécable comprenant une tête de bielle pourvue d'un alésage et un coussinet disposé dans l'alésage, caractérisée en ce que le coussinet est un coussinet intégré constitué par une couche d'un alliage métallique déposée sur la surface de l'alésage.

2. Bielle selon la revendication 1, caractérisée en ce que l'alliage métallique de la couche constituant le coussinet intégré est un alliage choisi parmi les alliages :
| **Alliage n°** | **Composition % en poids** | | | | | |
|---|---|---|---|---|---|---|
| | Sn | Si | Zn | Mg | Cu | Al |
| 1 | 5-25 | - | - | - | 1-3 | complément |
| 2 | 5-20 | 2-6 | - | - | 1-3 | complément |
| 3 | 5-25 | - | 2-5 | 1-2 | 1-2 | complément |
| 4 | 3-10 | - | - | - | Complément | 5-25 |
| et des impuretés éventuelles. | | | | | | |

3. Bielle selon la revendication 1 ou 2, caractérisée en ce que l'alliage est choisi parmi les alliages :
| **Alliage n°** | **Composition % en poids** | | | | | |
|---|---|---|---|---|---|---|
| | Sn | Si | Zn | Mg | Cu | Al |
| 5 | 20-25 | - | - | - | 1,4 | complément |
| 6 | 18 | 5 | - | - | 2 | complément |
| 7 | 20 | - | 4-5 | 1-5 | 1-6 | complément |
| 8 | 3-7 | - | - | - | Complément | 5-15 |
| et des impuretés éventuelles. | | | | | | |

4. Bielle selon la revendication 2 ou 3, caractérisée en ce que l'alliage de la couche constituant le coussinet intégré a une porosité comprise entre 2 et 10% en volume, de préférence d'environ 5 *%* en volume.

5. Bielle selon l'une quelconque des revendications 2 à 4, caractérisée en ce que l'alliage de la couche constituant le coussinet intégré a une dureté HV0,5 comprise entre 40 et 250.

6. Bielle selon l'une quelconque des revendications précédentes, caractérisée en ce que la couche d'alliage constituant le coussinet intégré a une épaisseur comprise entre 100 et 350µm, de préférence entre 150 et 300µm.

7. Bielle selon l'une quelconque des revendications précédentes, caractérisée en ce qu'elle comprend une sous-couche d'un alliage nickel-aluminium entre la surface de l'alésage et la couche d'alliage constituant le coussinet intégré.

8. Bielle selon la revendication 7, caractérisée en ce que la sous-couche a une épaisseur comprise entre 50 et 100µm.

9. Bielle selon l'une quelconque des revendications précédentes, caractérisée en ce qu'elle est constituée d'une fonte ou d'un acier forgé ou fritté ou d'un alliage de titane ou d'aluminium.

10. Procédé de fabrication d'une bielle sécable à coussinet intégré, comprenant un corps de bielle et une tête de bielle pourvue d'un alésage , caractérisé en ce qu'il consiste à déposer par pulvérisation par plasma, au moyen d'une torche d'intérieur adaptée aux dimensions de l'alésage à traiter, sur la surface de l'alésage une couche d'un alliage métallique et à usiner, la couche d'alliage déposée jusqu'à l'épaisseur voulue pour le coussinet intégré.

11. Procédé selon la revendication 10, caractérisé en ce que l'alliage pulvérisé est sous forme de poudre, fil ou de fil fourré.

12. Procédé selon la revendication 11, caractérisé en ce que l'alliage pulvérisé est sous forme d'une poudre de particules sphériques.

13. Procédé selon l'une quelconque des revendications 10 à 12. caractérisé en ce que l'alliage est choisi parmi les alliages :
| **Alliage n°** | **Composition % en poids** | | | | | |
|---|---|---|---|---|---|---|
| | Sn | Si | Zn | Mg | Cu | Al |
| 1 | 5-25 | - | - | - | 1-3 | complément |
| 2 | 5-20 | 2-6 | - | - | 1-3 | complément |
| 3 | 5-25 | - | 2-5 | 1-2 | 1-2 | complément |
| 4 | 3-10 | - | - | - | Complément | 5-25 |
| et des impuretés éventuelles. | | | | | | |

14. Procédé selon la revendication 13, caractérisé en ce que l'alliage est choisi parmi les alliages :
| **Alliage n°** | **Composition % en poids** | | | | | |
|---|---|---|---|---|---|---|
| | Sn | Si | Zn | Mg | Cu | Al |
| 5 | 20-25 - | | - | - | 1,4 | complément |
| 6 | 18 | 5 | - | - | 2 | complément |
| 7 | 20 | - | 4-5 | 1-5 | 1-6 | complément |
| 8 | 3-7 | - | - | - | Complément | 5-15 |
| et des impuretés éventuelles. | | | | | | |

15. Procédé selon l'une quelconque des revendications 10 à 14, caractérisé en ce que la couche d'alliage constituant le coussinet intégré est soumis après dépôt à un traitement thermique à une température comprise entre 150 et 400°C dans l'air.

16. Procédé selon l'une quelconque des revendications 10 à 14. caractérisé en ce que il comprend, préalablement au dépôt et de la couche d'alliage une étape préalable de nettoyage de la surface de l'alésage.

17. Procédé selon la revendication 16, caractérisé en ce que l'étape de nettoyage est une étape de sablage destinée à créer une rugosité dans la surface de l'alésage.

18. Procédé selon l'une quelconque des revendications 10 à 17, caractérisé en ce que il comprend préalablement au dépôt de la couche d'alliage constituant le coussinet une étape de dépôt par pulvérisation par projection plasma d'une couche d'un alliage Ni-Al pour accroître l'adhérence de la couche d'alliage constituant le coussinet intégré.

19. Procédé selon la revendication 18, caractérisé en ce que la sous-couche d'adhérence a une épaisseur comprise entre 50 et 100µm, de préférence d'environ 50µm.

20. Procédé selon l'une quelconque des revendications 10 à 19, caractérisé en ce que la couche d'alliage constituant le coussinet intégré a une épaisseur avant usinage, comprise entre 300 et 700µm.

21. Alliage pour la fabrication d'un coussinet intégré de bielle caractérisé en ce qu'il est choisi parmi les alliages :
| **Alliage n°** | **Composition % en poids** | | | | | |
|---|---|---|---|---|---|---|
| | Sn | Si | Zn | Mg | Cu | Al |
| 1 | 5-25 | - | - | - | 1-3 | complément |
| 2 | 5-20 | 2-6 | - | - | 1-3 | complément |
| 3 | 5-25 | - | 2-5 | 1-2 | 1-2 | complément |
| 4 | 3-10 | - | - | - | Complément | 5-25 |
| et des impuretés éventuelles. | | | | | | |

22. Alliage selon la revendication 21, caractérisé en ce qu'il est choisi parmi les alliages :
| **Alliage n°** | **Composition % en poids** | | | | | |
|---|---|---|---|---|---|---|
| | Sn | Si | Zn | Mg | Cu | Al |
| 5 | 20-25 | - | - | - | 1,4 | complément |
| 6 | 18 | 5 | - | - | 2 | complément |
| 7 | 20 | - | 4-5 | 1-5 | 1-6 | complément |
| 8 | 3-7 | - | - | - | Complément | 5-15 |
| et des impuretés éventuelles. | | | | | | |

23. Alliage selon la revendication 21 ou 22, caractérisé en ce qu'il est sous forme de poudre.

24. Alliage selon la revendication 23, caractérisé en ce que la poudre est constituée de particules sphériques.
